# EUROPÄISCHE PATENTANMELDUNG

(11) **EP 4 170 312 A1**
(43) Veröffentlichungstag der Anmeldung: **26.04.2023**
(21) Anmeldenummer: 22199646.5
(22) Anmeldetag: 04.10.2022
(51) Int. Cl.: G01M 3/26

(54) **VERFAHREN SOWIE VORRICHTUNG ZUM DETEKTIEREN EINER LECKAGE IN EINEM FLUIDVERSORGUNGSNETZ EINES GEBÄUDES**

(30) Priorität: 19.10.2021 DE 102021127108
(71) Anmelder: Westnetz GmbH, 44139 Dortmund (DE)
(72) Erfinder: Pan, Patrick, 40470 Düsseldorf (DE); Reitz, Peter, 50997 Köln (DE)
(74) Vertreter: Bals & Vogel Patentanwälte PartGmbB

(57) **Zusammenfassung**

Die Erfindung betrifft ein Verfahren sowie eine Vorrichtung (30) zum Detektieren einer Leckage in einem Fluidversorgungsnetz (12) eines Gebäudes (50).

## Beschreibung

Die Erfindung betrifft ein Verfahren sowie eine Vorrichtung zum Detektieren einer Leckage in einem Fluidversorgungsnetz eines Gebäudes.

Aus dem Stand der Technik sind Zähler zum Erfassen einer Menge eines Versorgungsmediums, die über einen bestimmten Kanal übertragen wurde, bekannt, um beispielsweise eine verbrauchte Menge des Versorgungsmediums zu bestimmen. Beispielsweise sind Stromzähler bzw. Elektrizitätszähler zum Erfassen der Strom- bzw. Energiemenge bekannt, die über eine überwachte Stromleitung ausgetauscht wird.

So kann ein Gebäude oder ein Teil eines Gebäudes (z. B. eine bestimmte Wohnung) einen Stromzähler umfassen, um die von den elektrischen Verbrauchern des Gebäudes bzw. des Teils des Gebäudes verbrauchte Stromenge (bzw. verbrauchte elektrische Energiemenge) zu erfassen, also insbesondere die von einem Stromverteilnetz erhaltene Strommenge. Es versteht sich, dass für den Fall, dass ein Erzeuger (z. B. Photovoltaikanlage und dergleichen) vorgesehen ist, durch den mindestens einen Stromzähler auch die in ein Stromverteilnetz eingespeiste Strommenge erfasst werden kann.

Im Rahmen des sogenannten "Smart Meter Rollouts" werden in Privathaushalten in Deutschland die analogen Stromzähler durch elektronische Stromzähler mit digitaler Zählerstandanzeige ersetzt. Dabei werden unter anderem sog. "intelligente Messsysteme" mit einer Kommunikationseinheit bzw. einem sog. "Smart-Meter-Gateway" zur Übermittlung des Zählerstands an eine Empfangsadresse des Netzstellenbetreibers bzw. Stromanbieters des Kunden installiert.

Infolgedessen können moderne Stromzähler an die Kommunikationseinheit bzw. das Smart-Meter-Gateway angeschlossen sein. Smart-Meter-Gateways dienen insbesondere der sicheren Übertragung der von dem Stromzähler gemessenen Strommenge beispielsweise an den Stromversorger (z. B. ein Backendsystem in Form von mindestens einem Server), beispielsweise zu Abrechnungszwecken und/oder zur Kundeninformation (z. B. können die Zählerdaten einem Kunden über ein Nutzerendgerät via dem Backendsystem bereitgestellt werden).

Auch in anderen Ländern findet die Modernisierung von Stromzählern durch das Ersetzen analoger Stromzähler durch digitale Stromzähler statt. Hierneben können auch andere Zählertypen, wie Gaszähler, Wasserzähler, Wasserstoffzähler oder Fernwärmezähler modernisiert werden und als intelligente Messsysteme mit Kommunikationseinheiten bzw. Smart-Meter-Gateway ausgestaltet werden.

Aufgrund der hohen Anforderungen an Datenschutz und Datensicherheit im Bereich intelligenter Messsysteme werden zukünftig in Deutschland nur solche intelligenten Messsysteme zugelassen, die den Anforderungen des Bundesamts für Sicherheit in der Informationstechnik (BSI) an ein Smart-Meter-Gateway genügen. In anderen Ländern sind in der Regel ähnliche Vorgaben vorgesehen, sodass die nachfolgenden Ausführungen entsprechend übertragbar sind.

Entsprechendes gilt für andere Zähler, wie Gaszähler, Wärmemengenzähler, Wasserzähler, sonstige Fluidzähler, wie Wasserstoffzähler, etc. Für eine flächendeckende Einführung von intelligenten Zählern ist es aus dem Stand der Technik daher bekannt, die derzeit installierten Zähler durch moderne elektronische, insbesondere digitale Zähler (so genannte "Smart Meter"), zu ersetzen. Nachteilig hieran ist jedoch, dass eigentlich funktionsfähige Zähler (z. B. ein Balgengaszähler) ersetzt werden müssen. Dies ist mit entsprechend hohen Kosten verbunden. Insbesondere sind elektronische Zähler, beispielsweise elektronische Gaszähler, sowohl in der Beschaffung als auch im Betrieb kostspieliger. Zudem ist die Lebensdauer/Standzeit dieser Zähler im Vergleich zu konventionellen Zählern, wie Balgenzähler deutlich reduziert.

DE 10 2019 111 324 A1 schafft in dieser Hinsicht eine Lösung, welche es ermöglicht, bereits installierte und noch funktionsfähige Zähler weiterzuverwenden und insbesondere die Kosten zu verringern.

Die Erfinder haben erkannt, dass neben den Zählerdaten selbst, auch weitere Informationen über die Umgebung des Zählers oder von Zählern mit Impulsausgang relevant sein können. Hierfür ist eine weitere und kostenintensive Kommunikationsinfrastruktur notwendig, die eine Kommunikation mit dem Smart-Meter-Gateway erlaubt.

Insbesondere kann eine solche Umgebungsinformation eine Leckageinformation über eine Leckage in einem Fluidversorgungsnetz sein, wobei unter Fluiden hierein beispielsweise Wasser und Gas verstanden werden. Zur Erkennung einer Leckage in einem solchen Fluidversorgungsnetz sind typischerweise eine Vielzahl von Sensoren notwendig, insbesondere an den Verbrauchern des Fluids im Gebäude. Diese Sensoren sind nicht nur kostenintensiv, auch müssen die Sensordaten zentral empfangen und ausgewertet werden, um daraus einen Rückschluss auf eine mögliche Leckage in dem Fluidversorgungsnetz treffen zu können.

Aufgabe der Erfindung ist es, eine einfache und kostengünstige Lösung bereitzustellen, mittels derer eine Leckage in einem Fluidversorgungsnetz erkannt werden kann.

Die voranstehende Aufgabe wird durch die Gegenstände der Patentansprüche, insbesondere durch ein Verfahren nach Anspruch 1, eine Vorrichtung nach Anspruch 8 und ein System nach Anspruch 12 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Verfahren offenbart sind, selbstverständlich auch im Zusammenhang mit der erfindungsgemäßen Vorrichtung und dem erfindungsgemäßen System sowie jeweils umgekehrt, sodass bezüglich der Offenbarung zu den einzelnen Erfindungsaspekten stets wechselseitig Bezug genommen wird beziehungsweise werden kann.

Demnach löst die Erfindung die Aufgabe gemäß einem ersten Aspekt durch ein Verfahren zum Detektieren einer Leckage in einem Fluidversorgungsnetz eines Gebäudes, wobei das Verfahren die folgenden Schritte aufweist:
- Erfassen zumindest eines ersten Signals eines im Fluidversorgungsnetz angeordneten Durchflussmessers durch eine Vorrichtung, wobei der Durchflussmesser einen Durchfluss unterhalb eines minimalen Messbereichs eines im Fluidversorgungsnetz angeordneten Zählers mit Impulsausgang erfassen kann,
- Erfassen zumindest eines zweiten Signals eines Zählergeräts des Zählers durch die Vorrichtung, und
- Auswerten des zumindest einen ersten Signals und des zumindest einen zweiten Signals mittels der Vorrichtung zur Detektion einer Leckage in dem Fluidversorgungsnetz.

Erfindungsgemäß wird damit vorgeschlagen, dass ein zusätzlich zum Zähler vorhandener Durchflussmesser in dem Fluidversorgungsnetz eingesetzt wird, der jedoch eine höhere Messgenauigkeit als der Zähler, der insbesondere ein konventioneller bzw. analoger Zähler, wie beispielsweise ein Balgenzähler sein kann, aufweist. Insbesondere allein durch wenigstens ein, insbesondere mehrere als erste bezeichnete Signale des Durchflussmessers, und durch wenigstens ein, insbesondere mehrere als zweite bezeichnete Signale eines am Zähler angeordneten Zählergeräts, kann nun eine Auswertung mittels der Vorrichtung erfolgen, die eine Detektion einer Leckage in dem Fluidversorgungsnetz erlaubt. Der Durchflussmesser kann dabei in geringem Abstand zum Zähler, in Durchflussrichtung, insbesondere hinter dem Zähler, angeordnet werden. Damit kann das Verfahren insbesondere einzig mittels der beiden Signaltypen, also dem ersten Signal und dem zweiten Signal, eine Feststellung bzw. Detektion einer Leckage erlauben. Andere Informationen, insbesondere Sensordaten, etwa an den Verbrauchern, werden nicht benötigt. Dadurch kann das Verfahren mit einer vergleichsweise kostengünstigen Messinfrastruktur auskommen.

Gleichwohl erlaubt das erfindungsgemäße Verfahren aufgrund dieser einfachen Infrastruktur keine präzise Angabe der Leckagemenge bzw. eines Leckagedurchflusses. Wie später näher beschrieben wird, ermöglicht eine besondere Ausführungsform eines Auswertealgorithmus, welcher auf der Vorrichtung ausgeführt werden kann, jedoch eine Erkennung einer besonders großen Leckage.

Wie erwähnt, kann für das Auswerten der beiden Signale zum Bestimmen einer Leckage ein Auswertealgorithmus zum Einsatz kommen, der von einer entsprechenden Recheneinheit bzw. Computereinheit der Vorrichtung ausgeführt werden kann. Der Auswertealgorithmus kann entsprechend auf einer Speichereinheit der Vorrichtung gespeichert und von der Recheneinheit bzw. Computereinheit, beispielsweise Mikrocontroller oder CPU, ausführbar sein. Ein detailliertes Beispiel eines möglichen Auswertealgorithmus wird mit Bezug auf die Figuren näher beschrieben, wobei im Folgenden u.a. besonders vorteilhafte Merkmale des Verfahrens und einer damit assoziierten Vorrichtung näher beschrieben werden, wobei diese Merkmale auch mittels bzw. in dem Auswertealgorithmus implementiert sein können.

Der Zähler, wie er hierin beschrieben wird, kann insbesondere ein herkömmlicher, insbesondere analoger, Zähler (z. B. ein Balgenzähler) mit mindestens einem Impulsausgang sein. Unter einem Impulsausgang ist insbesondere eine Hardware-Schnittstelle zu verstehen. Dabei kann es sich beispielsweise um ein Rollenzählwerk handeln. Der Impulsausgang ist zum Ausgeben von Impulsen eingerichtet. Anders ausgedrückt wird ein Zählerstand durch die Ausgabe von Impulsen ausgegeben und kann insbesondere in dem Zählergerät fortgeschrieben bzw. konvertiert werden. Das Zählergerät kann hierzu einen mit dem Impulsausgang koppelbaren Impulseingang aufweisen. Das Zählergerät kann insbesondere als ein Adapter bzw. Zähleradapter des Zählers ausgebildet sein. Zähler mit Impulsausgang werden insbesondere verwendet, um Impulse, die einem bestimmten Wert entsprechen, zu einem Empfänger zu übertragen. Die Kennzeichnung des Impulswertes kann insbesondere von dem Zählertyp abhängen. Beispielsweise kann die Impulswertigkeit wie folgt angegeben sein: x (Energieeinheiten)/Impuls oder die Impulsausgangsfrequenz: x Impulse/ (Energieeinheiten).

Es ist möglich, dass das Auswerten des zumindest einen ersten Signals und des zumindest einen zweiten Signals während einer vordefinierten Messdauer einer Anzahl von Durchläufen eines Auswerteverfahrens, insbesondere Auswertealgorithmus, durchgeführt wird. Dabei kann die vordefinierte Messdauer in Abhängigkeit von dem minimalen Messbereich des Zählers vordefiniert werden. Diese vordefinierte Messdauer beruht darauf, dass der, insbesondere konventionelle, Zähler einen minimalen Messbereich aufweist. Nicht jeder Durchfluss wird also zwangsläufig von dem Zähler erfasst. Beispielsweise kann der minimale Messbereich eines Gaszählers durch einen Mindestdurchfluss von 40 Litern Gas pro Stunde (40 l/h) gegeben sein. Unter der beispielhaften Annahme eines konstanten Durchflusses und der beispielhaften Annahme, dass ein Impuls am Zählergerät einen Durchfluss von 10 Litern repräsentiert, kann damit davon ausgegangen werden, dass alle 15 Minuten bzw. 900 Sekunden ein Impuls von dem Zählergerät erfasst werden sollte. Das Zählergerät kann diesen Impuls als zweites Signal an die Vorrichtung weiterleiten bzw. kann die Vorrichtung diesen als zweites Signal erfassen. Nun kann die Messdauer als Anzahl von Durchläufen des Auswerteverfahrens definiert werden, wobei ein Durchlauf sich beispielsweise jede Sekunde ereignen kann bzw. derart definiert werden kann. Nun kann die Messdauer beispielsweise auf das Doppelte der zuvor berechneten Dauer, bis ein Impuls erfasst wird, festgelegt werden, also auf 2 mal 900 Sekunden und damit 1.800 Sekunden, was wiederum 1.800 Durchläufe des Auswerteverfahrens bedeutet, weil jeder Durchlauf sich zu jeder Sekunde ereignet, wie beispielhaft festgelegt worden ist. Durch diese festgelegte bzw. vordefinierte Messdauer im Auswerteverfahren ist keine umständliche Zeitbasis bzw. Zeiterfassung notwendig. Stattdessen kann ein einfaches Auswerteverfahren, insbesondere Auswertealgorithmus, bereitgestellt werden, der von der Vorrichtung ausgeführt wird. Mit der vordefinierten Messdauer kann dann beispielsweise festgelegt werden, wie lange bzw. wie viele Zähldurchläufe des Auswertealgorithmus durchlaufen werden müssen, bis eine vergleichsweise sichere Aussage über das Vorliegen einer Leckage getroffen werden kann. Auch kann die Anzahl der Zähldurchläufe bzw. das Überschreiten der vordefinierten Messdauer als Kriterium dafür genutzt werden, dass eine Leckage vorhanden ist.

Möglich ist ferner, dass jedes des zumindest einen ersten Signals einen Durchfluss repräsentiert und/oder jedes des zumindest einen zweiten Signals einen Impuls des Zählers repräsentiert. Das erste Signal kann ein Ein-Signal eines Signalausgangs des Durchflussmessers sein. Das erste Signal wird also immer dann gesendet, wenn der Durchflussmesser einen Durchfluss misst. Ansonsten wird ein Aus-Signal generiert. Das erste Signal kann auch die Angabe des Durchflusses des Fluides, also etwa in Litern pro Zeiteinheit enthalten.

Möglich ist auch, dass abhängig von dem Erfassen des zumindest einen ersten Signals und/oder des zumindest einen zweiten Signals Zählschleifen des Auswerteverfahrens durchlaufen werden, die gezählt werden, um eine Leckage zu detektieren. Dadurch kann das Auswerteverfahren nur von den beiden Signalen bzw. Zählschleifen abhängig gemacht werden, sodass das Verfahren besonders einfach ausführbar ist, weil es nicht auf die Höhe der Durchflüsse ankommt.

Dabei ist es möglich, dass eine Leckage detektiert wird, wenn eine sich aus der Anzahl der gezählten Zählschleifen ergebende Dauer bzw. Zähldauer größer als die vordefinierte Messdauer ist. Mit anderen Worten kann das Auswerteverfahren derart ausgestaltet sein, dass wenn eine Anzahl von durchlaufenen Zählschleifen gezählt worden ist, deren Zähldauer die gemäß der Messdauer definierte Anzahl an vordefinierten Durchläufen des Auswerteverfahrens übersteigt, sicher auf eine Leckage geschlossen werden kann.

Neben oder zusätzlich zu dieser Möglichkeit, eine Leckage zu detektieren, kann das Auswerteverfahren ferner eine Überwachung zur Schwellenwertüberschreitung aufweisen, um eine besonders große Leckage zu detektieren. Diese zusätzliche Überwachung kann wiederum mit eigenen Durchläufen bzw. einem eigenen Zähler zum Zählen von Durchläufen ausgestattet sein, um für eine vordefinierte Messdauer bestimmen zu können, ob ein vordefinierter Schwellenwert innerhalb der vordefinierten Messdauer überschritten wird. Auch hier kann die Messdauer in Abhängigkeit von entsprechenden Durchläufen definiert werden.

Gemäß einem zweiten Aspekt der Erfindung wird die eingangs erwähnte Aufgabe gelöst durch eine Vorrichtung zum Detektieren einer Leckage in einem Fluidversorgungsnetz eines Gebäudes, wobei die Vorrichtung zum Ausführen des Verfahrens nach dem ersten Aspekt der Erfindung eingerichtet ist.

Die Vorrichtung kann ferner zum Übermitteln von einer Leckageinformation eines Fluidversorgungsnetzes eines Zählers mit einem Impulsausgang an ein Smart-Meter-Gateway eingerichtet sein, wobei die Vorrichtung einen Informationsausgang zum Übermitteln der Leckageinformation aufweist, und wobei die Vorrichtung Teil eines Zählergeräts ist oder dazu eingerichtet ist, mit einem Zählergerät gekoppelt zu werden, wobei das Zählergerät zur Kommunikation mit dem entfernt davon angeordneten Smart-Meter-Gateway eingerichtet ist. Dadurch kann eine Leckageinformation mit derselben Infrastruktur übertragen werden, wie sie bereits durch das Zählergerät bereitgestellt wird. Unter der Leckageinformation wird dabei eine Information verstanden, die von der Vorrichtung bei Detektion einer Leckage erzeugt werden kann bzw. wird. Dies vermeidet hohe Kosten einer ansonsten doppelten Infrastruktur für die weitere Übertragung der Leckageinformation und wird ganz einfach dadurch ermöglicht, dass die Vorrichtung mit dem Informationsausgang als Teil des Zählergeräts ausgebildet wird oder aber damit koppelbar ausgebildet wird.

Da die Leckageinformation insoweit insbesondere eine für die Sicherheit in einem Gebäude relevante Information ist, kann die Vorrichtung auch als eine Sicherheitsvorrichtung oder als ein Sicherheitsmodul bezeichnet werden, da durch Früherkennung von einer Leckage die Sicherheit im Gebäude erhöht werden kann. Die Leckage betrifft insbesondere eine Leckage des Versorgungsmediums im Fluidversorgungsnetzes, welches vom Zähler erfasst wird. Bei einem Gaszähler kann es sich beispielsweise um eine Gasleckage in seiner Umgebung handeln und bei einem Wasserzähler kann es sich beispielsweise um eine Wasserleckage in seiner Umgebung handeln. Die Leckageinformation kann insoweit einen Alarmzustand melden, wenn Wasser oder Gas in der Umgebung bzw. im Leitungssystem des Gebäudes festgestellt wird.

Grundsätzlich kann der Informationsausgang der Vorrichtung durch jede beliebige drahtgebundene oder drahtlose Verbindungseinheit gebildet werden. Ganz besonders kann der Informationsausgang jedoch durch eine Steckverbindung oder eine Nahfeldkommunikationseinheit gebildet werden. Bei der Steckverbindung kann die Vorrichtung einfach an ein bestehendes Zählergerät angesteckt werden. Die Steckverbindung kann neben der Kopplung zur Datenübertragung auch ein mechanisches Koppeln von Vorrichtung und Zählergerät, wenn diese separat voneinander ausgebildet sind, ermöglichen. Bei der Nahfeldkommunikationseinheit kann das Zählergerät seinerseits eine korrespondierende Einheit aufweisen, die zur Nahfeldkommunikation mit der Nahfeldkommunikationseinheit der Vorrichtung eingerichtet ist. Die Nahfeldkommunikation ermöglicht bei einer ebenfalls separaten Ausbildung von Vorrichtung und Zählergerät eine räumliche Nähe der beiden zueinander.

Die Vorrichtung kann als eine Nachrüsteinheit des Zählergeräts ausgebildet sein. Mit anderen Worten kann die Nachrüsteinheit eine separate Einheit sein, die am Zählergerät angeordnet werden kann oder auch nicht, d. h. auch nachgerüstet werden kann. Dies ermöglicht es, dass die Funktionalität der Leckagedetektion und, wie später näher erläutert, ggf. auch einer Übermittlung der Leckageinformation später an einem Zählergerät nachgerüstet werden kann. Die Vorrichtung kann ganz besonders ein von dem Zählergerät separat ausgebildetes Gehäuse und auch eine eigene, insbesondere autarke, Energieversorgungseinheit, bspw. eine Batterie, aufweisen. Alternativ können sich die Vorrichtung und das Zählergerät aber auch eine Energieversorgungseinheit, insbesondere Batterie, teilen.

Ferner kann die Vorrichtung dazu eingerichtet sein, ein Ventil in dem Fluidversorgungsnetz anzusteuern, um das Fluidversorgungsnetz zu sperren, wenn eine Leckage detektiert wird.

Gemäß einem dritten Aspekt der Erfindung wird die eingangs erwähnte Aufgabe gelöst durch ein System, umfassend einen im Fluidversorgungsnetz angeordneten oder anordenbaren Durchflussmesser, ein an einem Zähler im Fluidversorgungsnetz angeordnetes oder anordenbares Zählergerät und die Vorrichtung nach dem zweiten Aspekt der Erfindung.

Das System kann das zuvor erwähnte Smart-Meter-Gateway und/oder zumindest einen drahtlos mit dem Smart-Meter-Gateway kommunizierenden Server aufweisen. Der zumindest eine Server kann ein Backendsystem, etwa des Netzbetreibers, bilden.

Ganz besonders kann der zumindest eine Server dazu eingerichtet sein, die Leckageinformation oder eine daraus abgeleitete Information an ein Endgerät einer dem Zähler zugeordneten Person zu senden. Eine abgeleitete Information kann beispielsweise ein Hinweis, eine Warnung oder ein Alarm basierend auf der Leckageinformation sein. So erhält die Person, welcher der Zähler zugeordnet ist, beispielsweise der Eigentümer oder Bewohner einer Wohneinheit einen aktuellen Hinweis zu der Umgebung seines Zählers.

Das Zählergerät ist, wie vorstehend erläutert worden ist, für einen Zähler mit einem Impulsausgang ausgebildet. Dabei kann das Zählergerät zur Kommunikation mit dem zuvor erwähnten Smart-Meter-Gateway eingerichtet sein und die Vorrichtung nach dem zweiten Aspekt der Erfindung kann mit dem Zählergerät gekoppelt sein oder Teil des Zählergeräts sein.

Insbesondere weist das Zählergerät zumindest einen Impulseingang zum Anschließen des Zählergeräts an den Impulsausgang des Zählers, zumindest eine Übersetzungseinrichtung zum Konvertieren der über den Impulseingang von dem Zähler erhaltenen Impulszählerdaten in einen Zählerdatensatz in einem Datenformat gemäß einem Standardprotokoll des Smart-Meter-Gateways, und zumindest einen Datensatzausgang zum Senden des konvertierten Zählerdatensatzes an das Smart-Meter-Gateway auf.

Indem das Zählergerät zum Anschließen an einen Zähler über den Impulsausgang des Zählers vorgesehen ist, wobei das Zählergerät erhaltene Impulszählerdaten (z. B. 0/1-Impulse) in Zählerdaten umwandelt (insbesondere in eine entsprechende Sprache), die von einem Smart-Meter-Gateway bzw. einer Kommunikationseinheit eines intelligenten Messsystems verarbeitet werden können, wird in einfacher Weise eine Möglichkeit geschaffen, bereits installierte und noch funktionsfähige Zähler weiterzuverwenden. Insbesondere kann eine Gateway-Anbindung über das Zählergerät erfolgen. Ein Austausch eines Zählers kann vermieden werden. Die Kosten zur Anbindung an ein Smart-Meter-Gateway bzw. eine Kommunikationseinheit eines intelligenten Messsystems werden reduziert. Zudem können die Kosten für den Betrieb von Zählern reduziert werden.

Der zumindest eine Impulseingang des Zählergeräts ist insbesondere zu dem Impulsausgang des anzuschließenden bzw. zu verbindenden Zählers korrespondierend ausgebildet. Anders ausgedrückt ist der Impulseingang derart ausgebildet, dass er unmittelbar oder mittelbar (z. B. über ein Verbindungskabel) mit dem Impulsausgang des Zählers mechanisch und elektrisch verbunden werden kann. Unter einem Impulseingang ist insbesondere eine Hardware-Schnittstelle zu verstehen. Der Impulseingang ist zum Empfangen von (zuvor beschriebenen) Impulsen eingerichtet. Anders ausgedrückt kann insbesondere ein Zählerstand eines Zählers durch den Empfang von Impulsen erhalten (bzw. fortgeschrieben) werden.

Die erhaltenen Impulse bzw. die Impulszählerdaten werden insbesondere einer Übersetzungseinrichtung des Zählergeräts zur Verfügung gestellt. Die Übersetzungseinrichtung konvertiert, insbesondere mittels geeigneter Mittel, die Impulszählerdaten in Daten, die von einem Smart-Meter-Gateway bzw. einer Kommunikationseinheit eines intelligenten Messsystems lesbar und insbesondere weiter verarbeitbar sind. Insbesondere setzt die Übersetzungseinrichtung die Impulszählerdaten in einen Zählerdatensatz in einem Datenformat gemäß einem Standardprotokoll des Smart-Meter-Gateways um, insbesondere gemäß einem Standard des OMS (Open Metering System). Anders ausgedrückt übersetzt die Übersetzungseinrichtung die 0/1-Impulse, die beispielsweise ein Balgenzähler abgibt, in eine Sprache, die das Smart-Meter-Gateway versteht und verarbeiten kann.

Der zumindest eine Datensatzausgang des Zählergeräts ist insbesondere in Form eines Kommunikationsmoduls bzw. einer Schnittstelle ausgebildet. Der Datensatzausgang ist eingerichtet, den von der Übersetzungseinrichtung zur Verfügung gestellten und konvertierten (bzw. fortgeschriebenen) Zählerdatensatz an das in Reichweite befindliche, aber entfernt von dem Zählergerät, angeordnetes Smart-Meter-Gateway zu senden, insbesondere zu übermitteln.

Insbesondere kann ein herstellerneutrales OMS-(Funk-)modul in Form des Zählergeräts zur BSI (Bundesamt für Sicherheit in der Informationstechnik)-konformen Anbindung eines Balgengaszählers mit Impulsausgang (oder dergleichen) an dem Smart-Meter-Gateway bereitgestellt werden.

Der zumindest eine Impulseingang des Zählergeräts kann ein drahtgebundener Impulseingang sein, eingerichtet zum Herstellen einer drahtgebundenen Verbindung zwischen dem Impulseingang des Zählergeräts und dem Impulsausgang des Zählers. Insbesondere kann ein Verbindungskabel (z. B. zwischen 0,1 m und 10 m, insbesondere zwischen 0,1 m und 3 m) zwischen dem Impulsausgang des Zählers und dem drahtgebundenen Impulseingang des Zählergeräts anschließbar sein. Das Zählergerät kann mittels der Drahtverbindung mit dem Impulsgeber des Zählers (via dem Impulsausgang) verbunden werden. Der Impulsgeber ist insbesondere vom Typ des Zählers abhängig (kann aber immer über einen Schließkontakt ein 0/1-Signal pro definierter Versorgungsmenge (z. B. Gasmenge) ausgeben). Das 0/1-Signal (Impuls) kann von der Elektronik der Übersetzungseinrichtung verarbeitet und in das notwendige Funksignal, welches von dem Smart-Meter-Gateway verarbeiten kann, umgewandelt werden. Dadurch kann eine besonders sichere Kommunikationsverbindung zwischen einem Zähler und dem Zählergerät hergestellt werden. Zudem kann das Zählergerät im Rahmen der durch das Verbindungskabel vorgegebenen Reichweite beliebig positioniert werden.

Insbesondere kann das Zählergerät derart positionierbar sein, dass eine Kommunikationsverbindung zwischen dem Datensatzausgang und dem Smart-Meter-Gateway herstellbar ist. Beispielhaft kann das Zählergerät in der Nähe eines Gaszählers, z. B. an der Wand, mittels eines Befestigungsmoduls (z. B. Schelle) an einer Rohrleitung, oder auch direkt am Gaszähler angebracht werden. Durch die Drahtverbindung (Kabel) mit dem Impulsgeber/Gaszähler kann ein Montageplatz gewählt werden, bei dem eine möglichst gute Funkverbindung mit dem Smart-Meter-Gateway gewährleistet ist.

Der zumindest eine Datensatzausgang kann ein drahtloser Datensatzausgang sein, der zum Senden des konvertierten Zählerdatensatzes und/oder der Leckageinformation über eine drahtlose Verbindung an das Smart-Meter-Gateway eingerichtet ist. Die drahtlose Verbindung kann insbesondere auf einem Wireless M-Bus-Standard basieren. Insbesondere kann die drahtlose Verbindung gemäß der Norm EN 13757-4 ausgeführt sein. In einfacher und gleichzeitig sicherer Weise können so Zählerdatensätze wie auch die Leckageinformation an ein Smart-Meter-Gateway weitergeleitet werden. Ein Smart-Meter-Gateway kann in herkömmlicher Weise die empfangenen Zählerdatensätze und Leckageinformation verarbeiten und insbesondere weiterleiten.

Das Zählergerät kann dazu eingerichtet sein, die Leckageinformation mittels eines Huckepack-Verfahrens bei der (regulären) Übermittlung eines konvertierten Zählerdatensatzes oder als Push-Nachricht über die drahtlose Verbindung an das Smart-Meter-Gateway zu übermitteln. Das Huckepack-Verfahren ist auch als sog. "Piggybacking"-Verfahren bekannt. Dabei werden definierte und bisher ungenutzte Bitstellen eines Statuswortes im Standardprotokoll des Smart-Meter-Gateways bzw. der drahtlosen Verbindung oder dem Datenkanal zwischen dem Zählergerät und dem Smart-Meter-Gateway genutzt. Derartige Bitstellen sind im Standprotokoll für eine Statusübertragung vorhanden, werden aber bei der Übermittlung des konvertierten Zählerdatensatzes nicht genutzt. Stattdessen werden Bitstellen etwa für die OBIS-Kennziffer, den Messwert, einen Eintragszeitstempel usw. genutzt. Erfindungsgemäß können nun auf einfache Art und Weise die vorhandenen, aber ungenutzten Bits genutzt werden, um die Leckageinformation zu übermitteln. Vorteilhafterweise kann die Datenübertragung dann gemeinsam mit der Übermittlung des Zählerdatensatzes erfolgen. Alternativ ist die Übertragung der Leckageinformation als Push-Nachricht bzw. im Rahmen einer Push-Nachricht möglich. Die Push-Nachricht wird sofort bei Erhalt der Leckageinformation gesendet. Dies hat den Vorteil, dass die Leckageinformation sofort gesendet wird und nicht abgewartet wird, bis erneut ein Zählerdatensatz übermittelt wird.

Darüber hinaus kann die zumindest eine Übersetzungseinrichtung eingerichtet sein zum Bestimmen des augenblicklichen Zählerstands des anschließbaren Zählers aus den erhaltenen Impulszählerdaten, wobei die zumindest eine Übersetzungseinrichtung eingerichtet sein kann zum Konvertieren des bestimmten Zählerstands, derart, dass der konvertierte Zählerdatensatz den bestimmten Zählerstand enthält. Aus dem Zählerstand kann/können insbesondere eine verbrauchte bzw. empfangene Versorgungsmediummenge und/oder die erzeugte bzw. eingespeisten Versorgungsmediummenge bestimmt werden. Wie bereits beschrieben wurde, können Impulse empfangen werden, aus denen die Übersetzungseinrichtung vorzugsweise den Zählerstand bestimmt. Ein Impuls kann wie folgt definiert sein: 30 ms ≤ t_EIN ≤ 120 ms; 30 ms ≤ t_AUS.

Das Zählergerät kann zumindest einen Datenspeicher umfassen, der zum Speichern mindestens einer zählertyp-basierten Übersetzungsregel, insbesondere in Form mindestens einer gespeicherten zählertyp-basierten Übersetzungsbeziehung eingerichtet ist. Die zumindest eine Übersetzungseinrichtung kann eingerichtet sein zum Konvertieren der über den Impulseingang von dem Zähler erhaltenen Impulszählerdaten in den Zählerdatensatz, basierend auf der mindestens einen Übersetzungsregel, also durch Anwenden bzw. Verarbeiten dieser Regel.

Insbesondere kann die Übersetzungsregel von der Impulswertigkeit des angeschlossenen Zählers abhängen. Basierend auf der Impulswertigkeit und der Impulszählerdaten kann der entsprechende Wert, insbesondere der Zählerstand, bestimmt und anschließend in ein Datenformat entsprechend einem Standardprotokoll eines Smart-Meter-Gateways übertragen werden. Insbesondere kann die Übersetzungsregel eine Regel für eine unmittelbare Umsetzung der Impulszählerdaten in Zählerdaten bzw. einen Zählerdatensatz in einem Datenformat entsprechend einem Standardprotokoll eines Smart-Meter-Gateways sein.

Beim Zählergerät kann in dem Datenspeicher (vorab) eine Mehrzahl von auswählbaren zählertyp-basierten Übersetzungsregeln für eine entsprechende Mehrzahl von unterschiedlichen Zählertypen gespeichert sein, insbesondere in Form einer Übersetzungstabelle (oder dergleichen) mit einer Mehrzahl von zählertyp-basierten Übersetzungsbeziehungen. Insbesondere kann eine Vielzahl von unterschiedlichen Übersetzungsregeln für eine entsprechende Mehrzahl von unterschiedlichen Zählertypen, beispielsweise unterschiedliche Gaszählertypen und/oder unterschiedliche Wasserzählertypen und/oder unterschiedliche Wärmezählertypen und/oder unterschiedliche Stromzählertypen, vorab, vorzugsweise werkseitig, gespeichert sein. Es versteht sich, dass vorab auch nur eine Übersetzungsregel von nur einem Zählertyp implementiert sein kann. Im bestimmungsgemäßen Betrieb ist insbesondere stets eine Übersetzungsregel ausgewählt.

Die von der Übersetzungseinrichtung (tatsächlich) anwendbare zählertyp-basierte Übersetzungsregel kann auswählbar sein in Abhängigkeit des Zählertyps des anzuschließenden Zählers. Anders ausgedrückt wird bei einem Anschluss eines Zählers der Zählertyp von diesem Zähler bestimmt und dann die Übersetzungsregel ausgewählt, die dieser Übersetzungsregel zugeordnet ist. Auswählen meint insbesondere, dass die entsprechende Regel aktiviert wird und die Übersetzungseinrichtung eine Konvertierung von Daten nur auf der aktivierten Regel durchführt. Anders ausgedrückt kann bei der Installation eine Konfigurierung des Zählergeräts in einfacher Weise durchgeführt werden.

Die zumindest eine Übersetzungseinrichtung kann eingerichtet sein zum Konvertieren der über den Impulseingang von dem Zähler erhaltenen Impulszählerdaten in den Zählerdatensatz, basierend auf der ausgewählten Übersetzungsregel. Indem eine Vielzahl von Übersetzungsregeln für eine entsprechende Mehrzahl von unterschiedlichen Zählertypen in dem Zählergerät gespeichert und auswählbar ist, kann ein herstellerunabhängiger und spartenunabhängiger Kommunikationsadapter bereitgestellt werden. Insbesondere ist ein entsprechendes anmeldungsgemäßes Zählergerät nicht nur bei einem bestimmten Zähler einsetzbar, sondern kann für unterschiedliche Gaszähler, Wasserzählertypen, Wärmemengenzählertypen, Stromzählertypen, etc. eingesetzt werden.

In dem Datenspeicher kann jeweils mindestens eine Kennung eines Zählertyps zusammen mit der zugeordneten Übersetzungsregel gespeichert sein. Unter einer Kennung eines Zählertyps ist insbesondere eine Angabe zu verstehen, durch die der Zählertyp eines Zählers (eindeutig) bestimmbar ist. Beispielsweise kann eine Seriennummer oder eine ähnliche, insbesondere eindeutige, alphanumerische Bezeichnung mit einem Nummernanteil, als Kennung eines Zählertyps verwendet werden.

Das Zählergerät kann mindestens eine Leseeinrichtung umfassen, die zum Erfassen einer dem anzuschließenden Zähler zugeordneten Kennung eingerichtet ist (insbesondere einer zuvor beschriebenen Kennung eines Zählertyps). Die Leseeinrichtung kann insbesondere ein optischer Scanner sein. Bei anderen Varianten kann auch ein RFID-basierter Leser, NFC-basierter Leser, etc. alternativ oder zusätzlich vorgesehen sein.

Die zumindest eine Übersetzungseinrichtung kann eingerichtet sein zum Auswählen der Übersetzungsregel abhängig von der erfassten Kennung. Insbesondere ist eine eindeutige Zuordnung zwischen Zähler und Kennung vorgesehen, sodass basierend auf der erfassten Kennung auf den Zählertyp des angeschlossenen oder anzuschließenden Zählers geschlossen werden kann. Eine Zuordnung liegt beispielsweise vor, wenn die Kennung, beispielsweise in Form eines lesbaren Codierungsmoduls (z.B. Strichcode, QR-Code, RFID- oder NFC-Tag etc.), in oder an oder zumindest benachbart zu dem Zähler angeordnet ist.

Auch kann vorgesehen sein, dass ein entsprechendes Codierungsmodul, insbesondere ein Strichcode oder QR-Code, in einer Betriebsanleitung des Zählers angeordnet ist. In einfacher und insbesondere zuverlässiger Weise kann die Übersetzungsregel ausgewählt werden, die dem anzuschließenden Zähler eindeutig zugeordnet ist.

Ferner kann ein Verfahren zum Übermitteln der Leckageinformation an ein Smart-Meter-Gateway in einem System gemäß dem dritten Aspekt der Erfindung vorgesehen werden, wobei das Verfahren die folgenden Schritte aufweisen kann:
- Erhalten von einer Leckageinformation von der Vorrichtung,
- Übermitteln der erhaltenen Leckageinformation an das Zählergerät mittels eines Informationsausgangs der Vorrichtung, und
- Übermitteln der Leckageinformation durch das Zählergerät an das Smart-Meter-Gateway.

Dabei kann das Übermitteln der Leckageinformation durch das Zählergerät an das Smart-Meter-Gateway mittels eines Huckepack-Verfahrens bei einer Übermittlung eines konvertieren Zählerdatensatzes oder als Push-Nachricht durch das Zählergerät erfolgen, wie oben bereits erläutert worden ist. Dazu kann das Verfahren im Übrigen den Schritt eines Konvertierens der über den Impulseingang des Zählergeräts von einem an den Impulseingang angeschlossenen Impulsausgang eines Zählers erhaltenen Impulszählerdaten in einen Zählerdatensatz in einem Datenformat gemäß einem Standardprotokoll des Smart-Meter-Gateways umfassen. Konvertieren meint dabei insbesondere ein Fortschreiben. Insbesondere wird der über die beschriebene Parametrierung eingestellte Initialzählerstand anhand der registrierten Impulse (mit der konfigurierten Impulswertigkeit) in dem Zählergerät fortgeschrieben.

Außerdem kann das Verfahren ferner die Schritte eines Übermittelns der Leckageinformation an den Server durch das Smart-Meter-Gateway und/oder eines Sendens der Leckageinformation oder einer daraus abgeleiteten Information an ein Endgerät einer dem Zähler zugeordneten Person (durch den Server bzw. das Backendsystem) aufweisen, wie oben bereits erläutert worden ist.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben wird. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht eines Ausführungsbeispiels eines Systems;
- Fig. 2: eine schematische Ansicht der Detektion einer Leckage in dem System;
- Fig. 3: eine schematische Ansicht eines Auswerteverfahrens, welches zur Detektion der Leckage durch eine Vorrichtung des Systems ausführbar ist;
- Fig. 4: eine schematische Ansicht eines ersten Anwendungsbeispiels zum Auswerteverfahren der Fig. 3;
- Fig. 5: eine schematische Ansicht eines zweiten Anwendungsbeispiels zum Auswerteverfahren der Fig. 3;
- Fig. 6: eine schematische Ansicht eines dritten Anwendungsbeispiels zum Auswerteverfahren der Fig. 3;
- Fig. 7: eine Detailansicht eines Teils des Auswerteverfahrens der Fig. 3; und
- Fig. 8: eine schematische Ansicht eines vierten Anwendungsbeispiels zum Auswerteverfahren der Fig. 3 und der Detailansicht der Fig. 7.

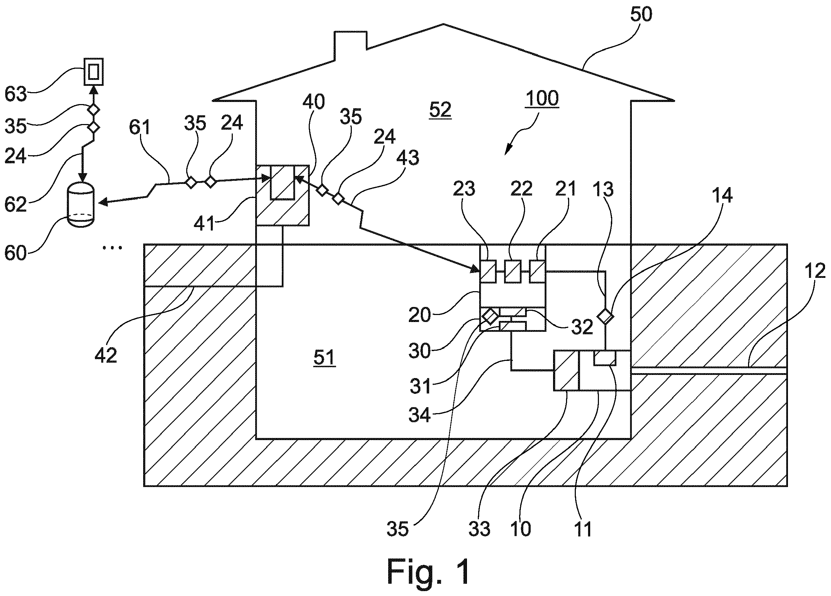

Figur 1 zeigt eine schematische Ansicht eines Ausführungsbeispiels eines Systems 100 gemäß einem Ausführungsbeispiel der Erfindung mit zumindest einem Zähler 10, vorliegend beispielhaft einem Gaszähler (z. B. Balgenzähler), und mindestens einem Zählergerät 20. Ferner umfasst das System 100 ein Smart-Meter-Gateway 41 eines intelligenten Messsystems 40.

Das dargestellte Zählergerät 20 weist optional mindestens ein Befestigungsmodul (z. B. Schraubmodul, Schelle etc.) auf, eingerichtet zum Befestigen des Zählergeräts 20, beispielsweise an einer Wand oder, wie dargestellt, einer Decke eines Gebäudes 50. Das Zählergerät 20 ist zur Verwendung mit einem herkömmlichen Zähler 10 (z. B. Balgenzähler) eingerichtet. Insbesondere kann das Zählergerät 20 kommunikativ mit einem Zähler 10, wie einem Wasserzähler, Gaszähler, Elektrizitätszähler bzw. Stromzähler und/oder Wärmemengenzähler verbunden werden.

Das dargestellte Zählergerät 20 weist ein Gehäuse auf, insbesondere aus einem Kunststoffmaterial. Insbesondere kann das gesamte Zählergerät 20 BSI-konform sein. Ferner weist das Zählergerät 20 einen Impulseingang 21 auf. Der Impulseingang 21 ermöglicht einen Anschluss des Zählergeräts 20 an einen Impulsausgang 11 des Zählers 10. Anders ausgedrückt ist der Impulseingang 21 eingerichtet zum Anschließen des Zählergeräts 20 an den Impulsausgang 11 eines Zählers 10. Der Impulseingang 21 ist insbesondere eine Hardware-Schnittstelle, die insbesondere zum Empfangen von Impulszählerdaten 14 eingerichtet ist, wie zuvor beschrieben wurde. Anders ausgedrückt kann ein (augenblicklicher) Zählerstand des angeschlossenen Zählers 10 durch den Empfang von Impulszählerdaten 14 (insbesondere einer entsprechenden Anzahl von Impulsen) über den Impulseingang 21 erhalten werden.

Darüber hinaus weist das Zählergerät 20 eine Übersetzungseinrichtung 22, insbesondere in Form eines Mikrocontrollers auf, die insbesondere in dem Gehäuse des Zählergeräts 20 (manipulationssicher) integriert ist. Die durch den Impulseingang 21 erhaltenen Impulszählerdaten 14 werden der Übersetzungseinrichtung 22 zur weiteren Verarbeitung bereitgestellt. Die Übersetzungseinrichtung 22 ist eingerichtet zum Konvertieren, insbesondere Fortschreiben, der über den Impulseingang 21 von dem Zähler 10 erhaltenen Impulszählerdaten 14 in einen Zählerdatensatz 24, der das Datenformat gemäß einem Standardprotokoll des Smart-Meter-Gateways 41 aufweist. Der Zählerdatensatz 24, der insbesondere zumindest den Zählerstand des angeschlossenen Zählers 10 enthalten kann, kann einem Datensatzausgang 23 des Zählergeräts 20 bereitgestellt werden.

Der Datensatzausgang 23 ist eingerichtet zum Senden des konvertierten, insbesondere fortgeschriebenen, Zählerdatensatzes 24 an das entfernt von dem Zählergerät 20 angeordnete Smart-Meter-Gateway 41. Vorzugsweise kann der Datensatzausgang 23 ein drahtloser Datensatzausgang 23 sein, eingerichtet zum Senden des konvertierten Zählerdatensatzes 24 über eine drahtlose Verbindung 43 an das entfernt von dem Zählergerät 20 angeordnete Smart-Meter-Gateway 41, insbesondere gemäß der Norm EN 13757-4. Insbesondere ist der mindestens eine Datensatzausgang 23 eingerichtet, eine OMS (z.B. MODE 7) konforme Funkanbindung an das Smart-Meter-Gateway 41 zu ermöglichen bzw. herzustellen.

Wie zu erkennen ist, ist das System 100 vorliegend in dem Gebäude 50 angeordnet. Vorliegend ist der Zähler 10 beispielhaft in einem Kellerbereich 51 des Gebäudes 50 angeordnet. Der Zähler 10 kann beispielsweise im Bereich des Gasanschlusses des Gebäudes 50 als Gaszähler implementiert sein, um insbesondere die von einem Fluidversorgungsnetz 12 bezogene Gasmenge zu erfassen. Alternativ kann es sich bei dem Zähler 10 beispielsweise aber auch um einen Wasserzähler handeln.

Das intelligente Messsystem 40 mit dem Smart-Meter-Gateway 41 ist vorliegend beispielhaft als ein Elektrizitätszähler bzw. Stromzähler ausgebildet und beispielhaft in einem Erdgeschossbereich 52 des Gebäudes 50 angeordnet. Der Elektrizitätszähler kann im Bereich des Elektrizitätsanschlusses des Gebäudes 50 implementiert sein, um insbesondere die von einem elektrischen Versorgungsnetz 42 bezogene elektrische Energie zu erfassen.

Im bestimmungsgemäßen Betrieb des Systems 100 ist der Impulseingang 21 des Zählergeräts 20 über ein Kabel 13 (oder dergleichen) mit dem Impulsausgang 11 des Zählers 10 verbunden. Über die drahtlose Verbindung 43, insbesondere eine OMS (z.B. MODE 7) konforme Funkverbindung, kann der konvertierte Zählerdatensatz 24 an das entfernt von dem Zählergerät 20 angeordnete Smart-Meter-Gateway 41 übermittelt werden.

Das Smart-Meter-Gateway 41 kann wiederum mittels einer, insbesondere BSI-, gesicherten Kommunikation 61 den konvertierten Zählerdatensatz 24 an einen Server 60 eines Backendsystems übertragen. Der Server 60 wiederum kann den Zählerdatensatz 24 verarbeiten und diesen mittels einer entsprechenden Verbindung 62 an einem Endgerät 63 einer Person, insbesondere des Gebäudeeigentümers oder -bewohners des Gebäudes 50, in gleicher oder veränderter, insbesondere aggregierter Form, bereitstellen.

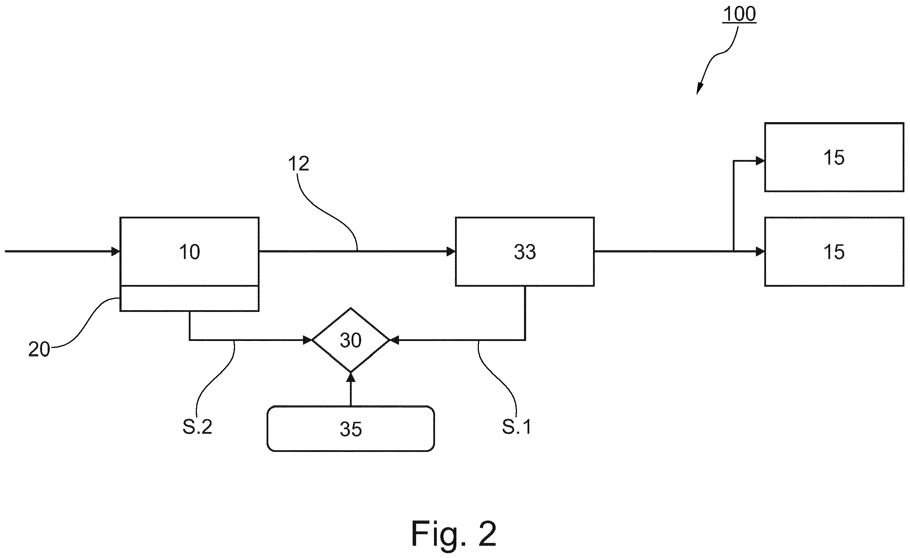

Mittels einer Vorrichtung 30 ist nun vorgesehen, dass eine Leckage in dem Fluidversorgungsnetz 12 des Zählers 10 detektiert werden kann, wie in Bezug auf die weiteren Figuren 2 bis 8 später detailliert beschrieben wird.

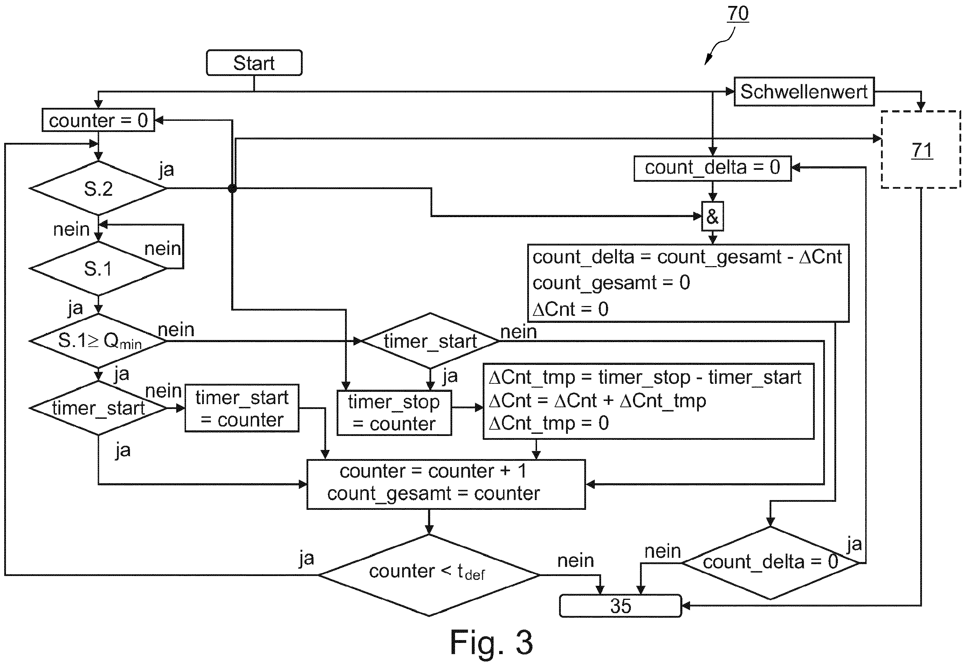

Ebenfalls kann die bei Detektion einer Leckage von der Vorrichtung 30 erzeugte Leckageinformation 35 von der Vorrichtung 30 an das Smart-Meter-Gateway 41 mittels derselben drahtlosen Verbindung 43 zwischen dem Zählergerät 20 und dem Smart-Meter-Gateway 41 übertragen werden, wie sie für die konvertierten Zählerdatensätze 24 genutzt wird. Dazu weist die Vorrichtung 30 ihrerseits eine Recheneinheit 31 bzw. Computereinheit, insbesondere Mikrocontroller oder CPU, auf, welche die Leckage gemäß einem Auswerteverfahren 70 (siehe beispielhaft hierfür die Fig. 3), insbesondere Auswertealgorithmus, detektieren kann und die Leckageinformation 35 erzeugen kann. Außerdem weist die Vorrichtung 30 einen Informationsausgang 32 zum Übermitteln der erzeugten Leckageinformation 35 mittels des Zählergeräts 20 an das Smart-Meter-Gateway 41 und weiter an den Server 60 und schließlich in gleicher oder veränderter, insbesondere als Warn- oder Alarmhinweis abgeleiteter, Form an das Endgerät 63.

Vorliegend ist die Vorrichtung 30 beispielsweise an das Zählergerät 20 angesteckt. Dies erfolgt vorliegend dadurch, dass der Informationsausgang 32 als ein Steckverbinder ausgebildet ist. Alternativ kann die Vorrichtung 30 aber auch von dem Zählergerät 20 beabstandet sein und der Informationsausgang 32 beispielsweise als eine Nahfeldkommunikationseinheit ausgeführt sein.

Die Recheneinheit 31 ist vorliegend mit einem Durchflussmesser 33 des Systems 100 verbunden. Dieser kann in der Umgebung vom Zähler 10, insbesondere in seinem Fluidversorgungsnetz 12 innerhalb des Gebäudes 50 (nicht dargestellt), und hinter dem Zähler 10 angeordnet sein. Der Durchflussmesser 33 ist mit einer höheren Messgenauigkeit als der Zähler 10 ausgestattet, er kann also einen Durchfluss Q unterhalb eines minimalen Messbereichs des Zählers 10 erfassen. Vorliegend ist der Durchflussmesser 33 mittels eines Kabels 34 drahtgebunden mit der Recheneinheit 31 verbunden. Alternativ kann eine drahtlose Verbindung 43 gewählt werden. Darüber hinaus ist die Recheneinheit 31 mit dem Zählergerät 20 verbunden.

Die Leckageinformation 35 weist auf eine Leckage des Versorgungsmediums hin, welches vom Zähler 10 gezählt wird bzw. im Fluidversorgungsnetz 12 des Zählers 10 strömt. Beim vorliegenden Beispiel des Gaszählers würde ein Erzeugen der Leckageinformation 35 an dem Zählergerät 20 beispielsweise auf eine Gasleckage hinweisen. Die Leckageinformation 35 wird von der Vorrichtung 30 an das Zählergerät 20 mittels des Informationsausgangs 32 übertragen.

Das Zählergerät 20 kann die Leckageinformation 35 gemeinsam mit dem konvertierten Zählerdatensatz 24 oder aber separat davon, etwa in Form einer Push-Meldung, an das Smart-Meter-Gateway 41 übermitteln, welche die Leckageinformation 35 wiederum an den Server 60 weiterleitet. Der Server 60 wiederum kann die Leckageinformation 35 oder einen davon abgeleiteten Warnhinweis bzw. ein Alarmsignal an das Endgerät 63 versenden, damit die Leckage behoben werden kann, bevor es zu einer ernsthaften Gefahrensituation kommt.

Figur 2 zeigt nun eine schematische Ansicht einer Detektion einer Leckage in dem System 100, die mittels der Vorrichtung 30 bereitgestellt wird.

Wie der Fig. 2 entnommen werden kann, sind der Zähler 10 und der Durchflussmesser 33 in dem Fluidversorgungsnetz 12 angeordnet. Das Zählergerät 20 ist an dem Zähler 10 angeordnet. An das Fluidversorgungsnetz 12 sind hinter dem Zähler 10 und dem Durchflussmesser 33 zudem mehrere Verbraucher 15 angeschlossen.

Nun senden das Zählergerät 20 und der Durchflussmesser 33 jeweils unabhängig voneinander Signale S.1, S.2 an die Vorrichtung 30, die von der Recheneinheit 31 der Vorrichtung 30 durch das Auswerteverfahren 70 bzw. den Auswertealgorithmus gem. Fig. 3 verarbeitet werden, um eine Leckage zu detektieren, soweit eine solche vorhanden ist. Ist eine Leckage vorhanden, wird die Leckageinformation 35 erzeugt und, wie in Bezug auf Fig. 1 erläutert worden ist, an den Server 60 weitergeleitet.

Die ersten Signale S.1 werden dabei von der Vorrichtung 30 erfasst, wenn der Durchflussmesser 33 einen Durchfluss Q misst, der, wie beschrieben, unterhalb des minimalen Messbereichs des Zählers 10 liegen kann. Die zweiten Signale S.2 wiederum werden von der Vorrichtung 30 immer dann erfasst, wenn ein Impuls am Impulseingang 21 des Zählergeräts 20 erfasst wird. Anderenfalls bleiben die beiden Signale S.1, S.2 aus bzw. werden von der Vorrichtung 30 nicht erfasst.

Das Auswerten der beiden Signale S.1, S.2 wird während einer vordefinierten Messdauer t_{def} einer Anzahl von Durchläufen eines Auswerteverfahrens 70 bzw. einer Auswertelogik dessen, wie es rein beispielhaft und schematisch in der Fig. 3 gezeigt ist, durchgeführt.

Die Messdauer t_{def} wird dabei in Abhängigkeit von dem minimalen Messbereich des Zählers 10 und in einer Anzahl von Durchläufen des Auswerteverfahrens 70 bzw. einer dieser zugrundeliegenden Auswertelogik vordefiniert, wobei hier beispielhaft jede Sekunde ein Durchlauf der Auswertelogik erfolgt. Die Messdauer t_{def} ist beispielhaft zu 2 (imp/Q_min) x 3600 vordefiniert. Dabei definiert imp die gemessene Fluidmenge pro Impuls des Zählers 10, die vorliegend beispielhaft 10 Liter beträgt. Q_min wiederum definiert den minimalen Messbereich des Zählers 10, der vorliegend beispielhaft 40 Liter pro Stunde beträgt. Damit ergibt sich eine Messdauer t_{def} von 1.800 Durchläufen der in Fig. 3 gezeigten Auswertelogik bzw. des Auswerteverfahrens 70.

Das Auswerteverfahren 70 ist dazu in der Lage, einzig mittels der erfassten Signale S.1, S.2 eine Leckage zu detektieren. Jedoch kann das Auswerteverfahren 70, weil es lediglich auf den Signalen S.1, S.2 beruht, keine präzise Aussage über einen Leckagedurchfluss bzw. - verlust geben. Dafür jedoch ist die Messinfrastruktur und die Auswertelogik besonders einfach ausgestaltet, so sind etwa keine zusätzlichen Messvorrichtungen an den Verbrauchern 15 notwendig und auch keine zentrale Einheit, die diese in Relation miteinander setzt.

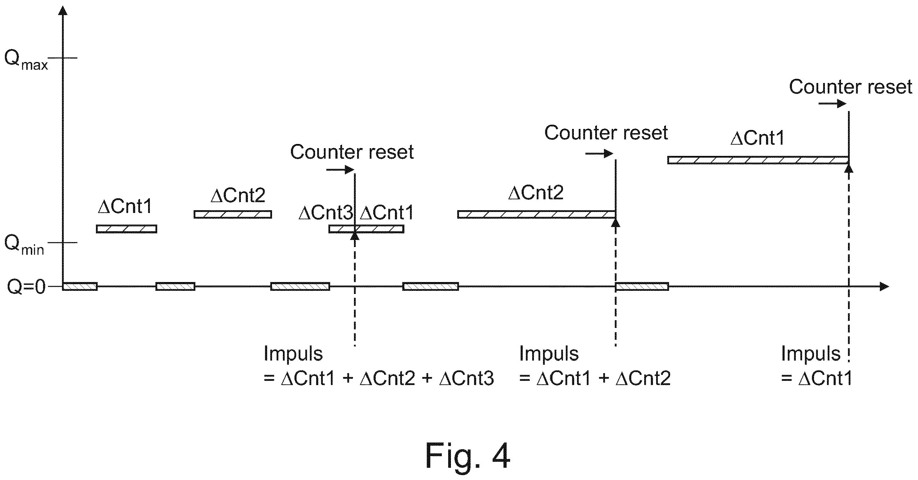

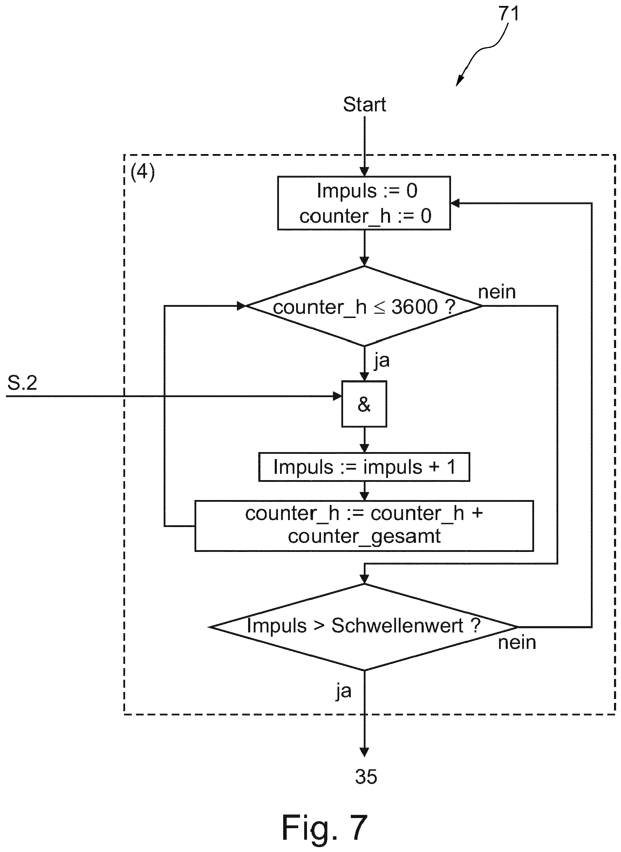

Insgesamt können mittels des in der Fig. 3 gezeigten Auswerteverfahrens 70 vier unterschiedliche Anwendungsfälle unterschieden werden, die in den folgenden Figuren 4, 5, 6 und 8 gezeigt werden, wobei Fig. 7 einen lediglich schematisch in der Fig. 3 dargestellten Teil des Auswerteverfahrens 70 in beispielhaftem Detail zeigt.

Das Auswerteverfahren 70 beruht dabei auf der Zählung Cnt von bei den Durchläufen des Auswerteverfahrens 70 durchlaufenen Zählschleifen in dem Auswerteverfahren 70 (engl. "Counts", kurz Cnt), welche von dem Erfassen der beiden Signalen S.1, S.2 abhängen. Die Zählung der bei den Durchläufen durchlaufenen Zählschleifen erfolgt durch einen Zählschleifen-Zähler (engl. "counter").

Fig. 4 betrifft den hierein als ersten bezeichneten Anwendungsfall im Fluidversorgungsnetz 12, dass ein regulärer Fluidverbrauch (also vom Zähler 10 registrierbarer bzw. oberhalb des minimalen Messbereichs Qmin des Zählers 10 liegender Fluidverbrauch) im Fluidversorgungsnetz 12 auftritt, bei dem keine Leckage auftritt.

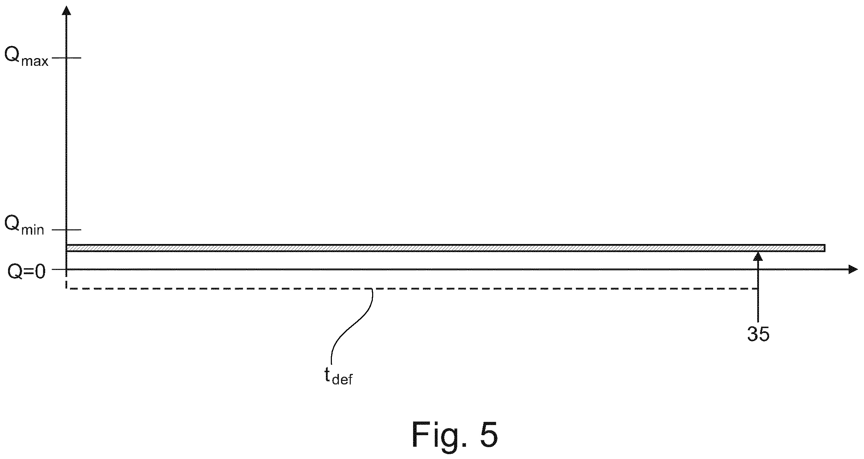

Fig. 4 zeigt dabei ebenso wie die Figuren 5, 6 und 8 ein Diagramm eines Durchflusses Q über der Zeit für einen rein beispielhaften Fluiddurchfluss Q. Qmin bezeichnet dabei den minimalen Messbereich des Zählers 10 und Qmax bezeichnet den maximalen Messbereich des Zählers 10.

In Fig. 4 wird der beispielhafte Fluidverbrauch durch die fett markierten und mit ΔCnt (für jeweils eine Zählung) bezeichneten Linien dargestellt. Ein Impuls beim Zählergerät 20 wird gebildet, sobald die Summe einzelner Verbräuche diesen Wert erreicht hat. Die fett markierten Linien bei Q = 0 stellen einen Durchfluss Q von Null dar, wenn kein Fluidverbrauch vorhanden ist.

Wie Fig. 3 entnommen werden kann, wird beim Start des Auswerteverfahrens 70 der Zähler 10 (counter) auf Null gesetzt.

Immer wenn der Durchfluss Q = 0 beträgt, wird die Zählschleife des Auswertealgorithmus angehalten, weil keines der beiden Signale S.1, S.2 an der Vorrichtung 30 erfasst wird (der Pfad des Auswerteverfahrens 70 mit jeweils nein bzgl. der Erfassung der Signale S.1 und S.2, weil keines der beiden Signale S.1, S.2 erfasst wird, wird wiederholt).

Sobald der Fluidverbrauch jedoch einsetzt, erfolgt eine Zählung Cnt von Zählschleifen (Pfad: S.2 nein, S.1 ja, S.1 ≥ Qmin, Starten des Zählschleifen-Zählers ["timer_start"] und Zählen der Zählschleifen [counter + 1]), bis ein Erfassen eines Impulses bzw. des zweiten Signals S.2 den Zählschleifen-Zähler wieder auf Null setzt (Signal S.2 auf ja und damit counter = 0). Somit beginnt die Messung erneut. Die Schleife läuft in diesem ersten Anwendungsfall endlos. Der im Folgenden näher erläuterte Pfad zur Erzeugung der Leckageinformation 35 kommt daher nicht zum Einsatz.

Fig. 5 betrifft den hierein als zweiten bezeichneten Anwendungsfall im Fluidversorgungsnetz 12, dass kein regulärer Fluidverbrauch im Fluidversorgungsnetz 12 (also vom Zähler 10 registrierbarer bzw. unterhalb Qmin liegender Fluidverbrauch) auftritt, bei dem aber eine Leckage auftritt.

Der hier ebenfalls fett eingezeichnete Durchfluss Q unterhalb Q_min deutet in diesem Fall auf Unregelmäßigkeiten hin und wird durch das Auswerteverfahren 70 aufgedeckt. Da der Zähler 10 hierbei keinen gültigen Verbrauch registrieren kann, wird der Zustand als Leckage interpretiert. Die vordefinierte Messdauer t_{def} beträgt hier, wie zuvor erläutert, beispielhaft 1800 Durchläufe. Diese ist, wie erläutert, gewählt als die Zeitdauer, die zwei Impulse beim konstanten Durchfluss von Q_min benötigen.

Hierbei wird die zuvor erläuterte Zählschleife des Auswerteverfahrens 70 solange wiederholt, bis die Messdauer bzw. die 1.800 Durchläufe erreicht werden und die Zählschleife verlassen wird. Der Pfad zur Erzeugung der Leckageinformation 35 kommt zum Einsatz.

Um genau zu sein, startet das Auswerteverfahren 70 erneut beim Start und setzt den Zählschleifen-Zähler auf Null (counter = 0). Das zweite Signal S.2 wird nicht erfasst, weil sich der Durchfluss Q unterhalb Qmin befindet. Jedoch wird kontinuierlich das erste Signal S.1 erfasst. Da der vom Durchflussmesser 33 erfasste Durchfluss Q kleiner als Qmin ist (S.1 ≥ Qmin), wird der Pfad mit nein beschritten. Dann wird geprüft, ob der Zählschleifen-Zähler bereits gestartet worden ist (timer_start). Dies ist nicht der Fall (nein), sodass der Zählschleifen-Zähler von Schleifendurchläufen um eins hochgesetzt wird (counter = counter + 1 mit count_gesamt = counter). Nun wird geprüft, ob der Zählschleifen-Zähler kleiner als die vordefinierte Messdauer t_{def} ist. Wenn dies der Fall ist (ja), dann wird eine weitere Zählerschleife, wie zuvor erwähnt, durchlaufen, die hier bei der Abfrage nach dem zweiten Signal S.2 startet.

Wenn nun, wie in Fig. 5 gezeigt ist, die durch 1.800 Durchläufe vordefinierte Messdauer t_{def} überschritten wird, also mehr als 1.800 Durchläufe erreicht worden sind bzw. durch den Durchfluss Q unterhalb von Qmin der Zähler 1.801 Schleifendurchläufe gezählt hat, dann kann auf eine Leckage geschlossen werden, sodass die Leckageinformation 35 erzeugt wird.

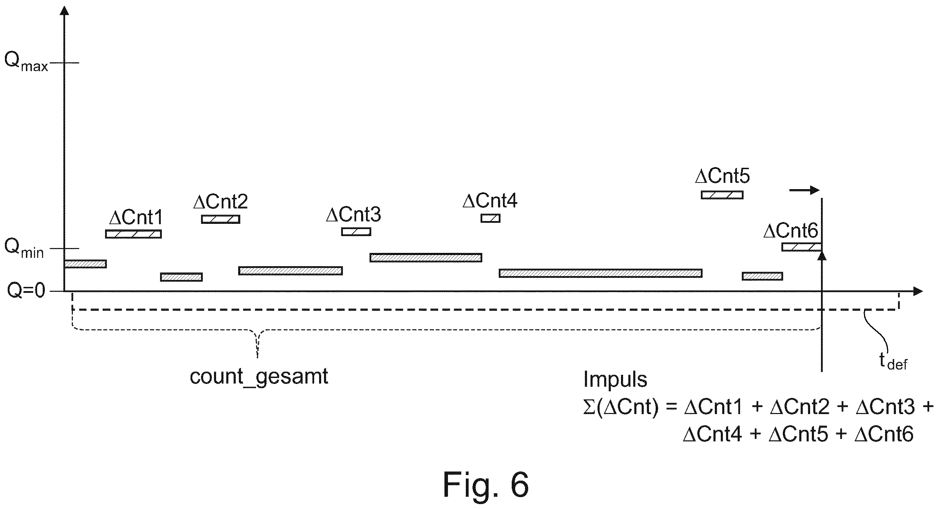

Fig. 6 betrifft den hierein als dritten bezeichneten Anwendungsfall im Fluidversorgungsnetz 12, dass ein regulärer Fluidverbrauch (also vom Zähler 10 registrierbarer bzw. oberhalb Qmin liegender Fluidverbrauch) im Fluidversorgungsnetz 12 auftritt, bei dem nun aber eine Leckage auftritt.

Der beispielhafte Fluidverbrauch wird auch hier durch die fett markierten und mit ΔCnt (für jeweils eine Zählung einer Zählschleife) bezeichneten Linien dargestellt. Ein Impuls wird gebildet sobald die Summe einzelner Verbräuche diesen Wert erreicht hat.

Die unterhalb von Qmin befindlichen fett markierten Linien stellen dagegen unerwartete Durchflüsse dar, die während der Verbrauchspausen in diesem Fall weiter stattfinden.

Der Algorithmus arbeitet derart, dass beim Zurücksetzen der Zählschleife durch den Empfang eines Impulses (also bei Erfassen des zweiten Signals S.2, also ja bei S.2 in dem Auswerteverfahren 70) auch der Leckageanteil aus dem Durchfluss Q ermittelt wird. Dabei wird dieser Anteil als die Differenz count_delta aus den zuvor ermittelten Gesamtdurchläufen count_gesamt minus der Anzahl von Zählschleifen ΔCnt (count_delta = count_gesamt - ΔCnt) berechnet. Dieser Teil des Algorithmus soll verhindern, dass eine Leckage gemischt mit Verbräuchen unentdeckt bleibt. Denn eigentlich erfolgt die Indikation der Leckage erst nach einem kompletten Ablauf einer vordefinierten Messdauer. Durch den parallel stattfindenden Fluidverbrauch kann jedoch vor einer vollständigen Messung der Impuls aus dem Zähler 10 vorliegen, der dann einen Neustart der Messung auslöst (counter = 0). Dabei wird die Zählung Cnt zur Leckage quasi gelöscht, sodass eine nicht vorhandene Leckage suggeriert werden würde. Der Algorithmus ist nun durch die Bildung der Differenz count_delta so ausgelegt, dass diese Löschung verhindert wird, indem die Leckage herausgerechnet wird, und dadurch eine Erzeugung der Leckageinformation 35 möglich wird.

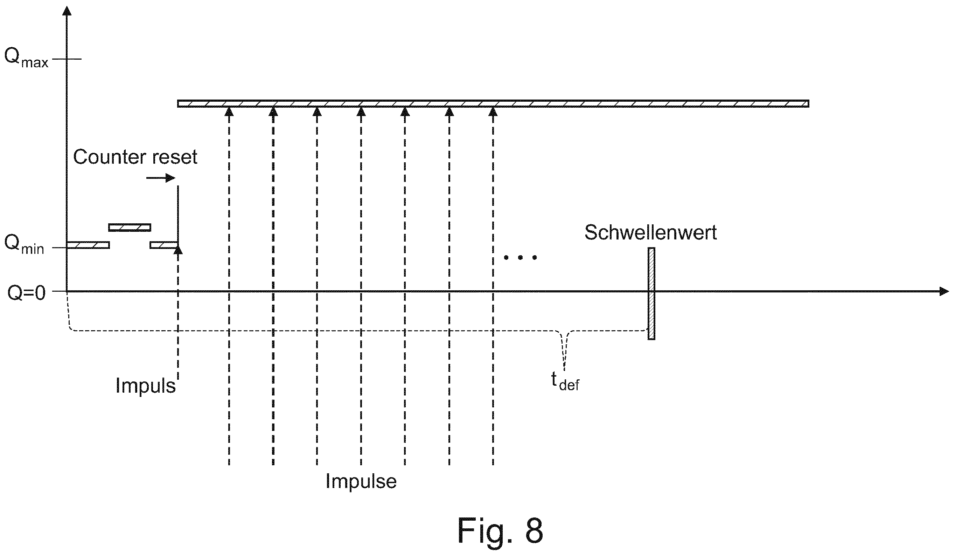

Fig. 8 betrifft den hierein als vierten bezeichneten Anwendungsfall im Fluidversorgungsnetz 12, dass ein ungewöhnlich hoher Fluidverbrauch im Fluidversorgungsnetz 12 auftritt, bei dem eine große Leckage vorhanden ist.

Der beispielhafte Fluidverbrauch wird auch hier durch die fett markierten Linien dargestellt. In diesem Anwendungsfall steigt ab einem gewissen Zeitpunkt der Verbrauch plötzlich rapide an, hier angedeutet mit der durchgezogenen langen Linie. Dies hat zur Folge, dass die Impulse in kürzeren Abständen kommen als es für die Vorort-Situation normal wäre.

Mittels einer Überwachung zur Schwellenwertüberschreitung 71 in dem Auswerteverfahren 70 der Fig. 3, wie sie detailliert in der Fig. 7 gezeigt wird, kann diese außergewöhnliche Situation ermittelt und als Leckage angezeigt werden. Diese zusätzliche Überwachung ist mit einem eigenen weiteren Zählschleifen-Zähler ("counter_h") zum Zählen von Durchläufen ausgestattet, um für eine weitere vordefinierte Messdauer t_{def}, hier beispielhaft 3.600 Durchläufe, bestimmen zu können, ob durch Erfassen des zweiten Signals S.2 ein vordefinierter Schwellenwert innerhalb der vordefinierten Messdauer t_{def} überschritten wird.

### Bezugszeichenliste

- 10: Zähler
- 11: Impulsausgang
- 12: Fluidversorgungsnetz
- 13: Kabel
- 14: Impulszählerdaten
- 20: Zählergerät
- 21: Impulseingang
- 22: Übersetzungseinrichtung
- 23: Datensatzausgang
- 24: Zählerdatensatz
- 30: Vorrichtung
- 31: Recheneinheit
- 32: Informationsausgang
- 33: Durchflussmesser
- 34: Kabel
- 35: Leckageinformation
- 40: intelligentes Messsystem
- 41: Smart-Meter-Gateway
- 42: elektrisches Versorgungsnetz
- 43: drahtlose Verbindung
- 50: Gebäude
- 51: Kellerbereich
- 52: Erdgeschossbereich
- 60: Server
- 61: gesicherte Kommunikation
- 62: Verbindung
- 63: Endgerät
- 70: Auswerteverfahren
- 71: Überwachung zur Schwellenwertüberschreitung
- S.1: erstes Signal
- S.2: zweites Signal
- Cnt: Zählung
- t_{def}: vordefinierte Messdauer
- Q: Durchfluss
- Qmin: minimaler Durchfluss
- Qmax: maximaler Durchfluss

## Patentansprüche

1. Verfahren zum Detektieren einer Leckage in einem Fluidversorgungsnetz (12) eines Gebäudes (50), wobei das Verfahren die folgenden Schritte aufweist:
- Erfassen zumindest eines ersten Signals (S.1) eines im Fluidversorgungsnetz (12) angeordneten Durchflussmessers (33) durch eine Vorrichtung (30), wobei der Durchflussmesser (33) einen Durchfluss (Q) unterhalb eines minimalen Messbereichs eines im Fluidversorgungsnetz (12) angeordneten Zählers (10) mit Impulsausgang (11) erfassen kann,
- Erfassen zumindest eines zweiten Signals (S.2) eines Zählergeräts (20) des Zählers (10) durch die Vorrichtung (30), und
- Auswerten des zumindest einen ersten Signals (S.1) und des zumindest einen zweiten Signals (S.2) mittels der Vorrichtung (30) zur Detektion einer Leckage in dem Fluidversorgungsnetz (12).

2. Verfahren nach Anspruch 1, wobei das Auswerten des zumindest einen ersten Signals (S.1) und des zumindest einen zweiten Signals (S.2) während einer vordefinierten Messdauer (t_{def}) einer Anzahl von Durchläufen eines Auswerteverfahrens (70) durchgeführt wird.

3. Verfahren nach Anspruch 2, wobei die vordefinierte Messdauer (t_{def}) in Abhängigkeit von dem minimalen Messbereich des Zählers (10) vordefiniert ist.

4. Verfahren nach Anspruch 2 oder 3, wobei abhängig von dem Erfassen des zumindest einen ersten Signals (S.1) und/oder des zumindest einen zweiten Signals (S.2) Zählschleifen des Auswerteverfahrens (70) durchlaufen werden, die gezählt werden, um eine Leckage zu detektieren.

5. Verfahren nach Anspruch 4, wobei eine Leckage detektiert wird, wenn eine sich aus der Anzahl der gezählten Zählschleifen ergebende Dauer größer als die vordefinierte Messdauer (t_{def}) ist.

6. Verfahren nach einem der Ansprüche 2 bis 5, wobei das Auswerteverfahren (70) eine Überwachung zur Schwellenwertüberschreitung (71) aufweist.

7. Verfahren nach einem der voranstehenden Ansprüche, wobei jedes des zumindest einen ersten Signals (S.1) einen Durchfluss (Q) repräsentiert und/oder jedes des zumindest einen zweiten Signals (S.2) einen Impuls des Zählers (10) repräsentiert.

8. Vorrichtung (30) zum Detektieren einer Leckage in einem Fluidversorgungsnetz (12) eines Gebäudes (50), wobei die Vorrichtung (30) zum Ausführen des Verfahrens nach einem der voranstehenden Ansprüche eingerichtet ist.

9. Vorrichtung (30) nach Anspruch 8, wobei die Vorrichtung (30) ferner zum Übermitteln von einer Leckageinformation (35) eines Fluidversorgungsnetzes (12) eines Zählers (10) mit einem Impulsausgang (11) an ein Smart-Meter-Gateway (41) eingerichtet ist, wobei die Vorrichtung (30) einen Informationsausgang (32) zum Übermitteln der Leckageinformation (35) aufweist, und wobei die Vorrichtung (30) Teil eines Zählergeräts (20) ist oder dazu eingerichtet ist, mit einem Zählergerät (20) gekoppelt zu werden, wobei das Zählergerät (20) zur Kommunikation mit dem entfernt davon angeordneten Smart-Meter-Gateway (41) eingerichtet ist.

10. Vorrichtung (30) nach Anspruch 8 oder 9, wobei die Vorrichtung (30) als eine Nachrüsteinheit des Zählergeräts (20) ausgebildet ist.

11. Vorrichtung (30) nach einem der Ansprüche 8 bis 10, wobei die Vorrichtung (30) dazu eingerichtet ist, ein Ventil in dem Fluidversorgungsnetz (12) anzusteuern, um das Fluidversorgungsnetz (12) zu sperren, wenn eine Leckage detektiert wird.

12. System (100), umfassend einen im Fluidversorgungsnetz (12) angeordneten oder anordenbaren Durchflussmesser (33), einen an einem Zähler (10) im Fluidversorgungsnetz (12) angeordnetes oder anordenbares Zählergerät (20) und die Vorrichtung (30) nach einem der Ansprüche 8 bis 11.

13. System (100) nah Anspruch 12, wobei das Zählergerät (20) zumindest eine Übersetzungseinrichtung (22) zum Konvertieren von über den Impulseingang (21) von dem Zähler (10) erhaltenen Impulszählerdaten (14) in einen Zählerdatensatz (24) in einem Datenformat gemäß einem Standardprotokoll des Smart-Meter-Gateways (41), und zumindest einen Datensatzausgang (23) zum Senden des konvertierten Zählerdatensatzes (24) an das Smart-Meter-Gateway (41) aufweist.
